# FASCICULE DE BREVET EUROPEEN

(11) **EP 0 582 012 B1**
(45) Date de publication et mention de la délivrance du brevet: **01.04.1998**
(21) Numéro de dépôt: 92401922.7
(22) Date de dépôt: 03.07.1992
(51) Int. Cl.: H02J 3/14

(54) **Procédé pour gérer la tarification de l'énergie électrique dans un réseau au sein d'un local**
Verfahren und Vorrichtung zur Steuerung der Stromverbrauchszählung in einer örtlichen Netzwerkanordnung
Method and device for managing the tariff of electrical power in a network of a room

(43) Date de publication de la demande: 09.02.1994
(60) Demande divisionnaire: 97104335.1
(73) Titulaire: EURO CP s.a.r.l., 94045 Créteil Cédex (FR)
(72) Inventeur: Gilbert, Jérôme, F-92300 Levallois Perret (FR)
(74) Mandataire: Pontet, Bernard

(56) Documents cités:
- EP-A- 0 208 597
- EP-A- 0 250 320
- EP-A- 0 372 961
- EP-A- 0 486 983
- FR-A- 2 670 590
- FR-A- 2 672 400
- US-A- 4 694 192

## Description

La présente invention concerne un procédé pour gérer la tarification de l'énergie électrique dans un réseau au sein d'un local, complétant efficacement les possibilités de planification des consommations qu'offrent habituellement les systèmes domotiques.

On entend par local, toute habitation indépendante ou collective et plus généralement tout immeuble, lieu de vie ou d'activité.

La gestion de la tarification consiste à utiliser des informations de changement de tarif, fournies directement ou indirectement par le distributeur d'énergie électrique, pour asservir et contrôler la mise en marche de certains appareils aux conditions économiques les plus favorables pour l'utilisateur.

La gestion de la tarification est aujourd'hui réalisée à l'aide d'un relais télécommandé au moyen d'informations directement émises par le distributeur d'énergie électrique ou commandé localement par une horloge, et placé à proximité du compteur d'énergie électrique, qui permet d'asservir le fonctionnement d'une charge à la présence du tarif dit d'heure creuse. Bien que l'exploitation du tarif "heure creuse" soit intéressante pour tous les appareils gros consommateurs d'énergie comme les lave-linge, sèche-linge, lave-vaisselle, appareils de chauffage etc.., la solution actuelle n'est généralement appliquée qu'à la production d'eau chaude sanitaire en égard à la complexité de l'installation qui résulterait de l'extension du service aux autres appareils de la maison et plus généralement du local.

Le FR-A-2 670 590 divulgue un procédé pour gérer la tarification de l'énergie électrique dans un réseau au sein d'un local, ce réseau comprenant des appareils pouvant communiquer entre eux de manière bidirectionnelle. L'appareil gestionnaire connecté au réseau construit un message contenant un code représentatif du tarif en vigueur dans le local, ce message étant diffusé avec un mode d'adressage qui limite sa portée logique aux appareils du local.

L'autre voie qui a été explorée est celle de la programmation horaire du fonctionnement des appareils à des heures qui coïncident avec la présence du tarif "heure creuse", cette solution coûteuse et peu commode devenant de plus difficile à mettre efficacement en pratique avec des changements de tarif que les distributeurs d'électricité souhaitent lier plus directement à la loi de l'offre de la demande en énergie.

Le but de l'invention est de proposer un procédé pour gérer la tarification de l'énergie électrique dans un réseau au sein d'un local, ledit réseau comprenant des appareils pouvant communiquer entre eux de manière bidirectionnelle, des moyens pour déterminer la tarification de l'énergie électrique en vigueur dans ce local, et un appareil dit gestionnaire connecté audit réseau, ledit procédé comprenant une étape de construction par l'appareil gestionnaire d'un message d'information tarifaire contenant un code représentatif du tarif en vigueur élaboré à partir d'informations tarifaires fournies par les moyens déterminant la tarification en vigueur et une diffusion de ce message d'information tarifaire sur le réseau avec un mode d'adressage qui limite sa portée logique aux appareils du local.

Selon l'invention, le procédé comprend en outre une étape d'élaboration par l'appareil gestionnaire d'un élément d'information binaire indiquant si le tarif en vigueur doit être considéré comme économique ou pas à partir des informations tarifaires fournies par les moyens de détermination et selon des conditions tarifaires associées à l'état de marche économique déterminées au niveau dudit gestionnaire, cet élément d'information binaire étant ensuite inclus dans le message d'information tarifaire.

Ainsi, avec le procédé selon l'invention, l'utilisateur du réseau peut utiliser de façon plus rationnelle et économique le parc d'appareils connectés au réseau puisque le gestionnaire va transmettre à destination des appareils qui présentent un fonctionnement compatible avec le procédé des informations tarifaires permettant à ces appareils d'adopter le mode de fonctionnement économique qui leur est adapté. En outre, le procédé selon l'invention peut être avantageusement associé à un procédé de gestion de puissance mettant en oeuvre des opérations de délestage/relestage.

D'autres particularités et avantages de l'invention apparaîtront encore dans la description ci-après. Aux dessins annexés donnés à titre d'exemples non limitatifs:
- la figure 1 représente le schéma-bloc d'un appareil pouvant mettre en oeuvre le procédé et effectuant la gestion combinée de la puissance et de la tarification ;
- la figure 2 donne un exemple de réseau domotique pouvant donner lieu à la mise en oeuvre du procédé ;
- la figure 3 représente les différentes étapes du procédé selon l'invention, qui incombent au gestionnaire d'énergie électrique ;
- la figure 4 représente les différentes étapes du procédé selon l'invention, qui sont suivies par les appareils du réseau.

Le procédé de gestion de tarification selon l'invention s'applique à un réseau domotique 20 reliant une pluralité d'appareils domestiques communicants qui utilisent l'énergie électrique pour délivrer leurs services. Le procédé selon l'invention repose sur un dialogue qui s'établit automatiquement entre des appareils domestiques et un appareil dit gestionnaire de l'énergie électrique dont le rôle est de coordonner la gestion de la tarification et de la puissance dans une maison.

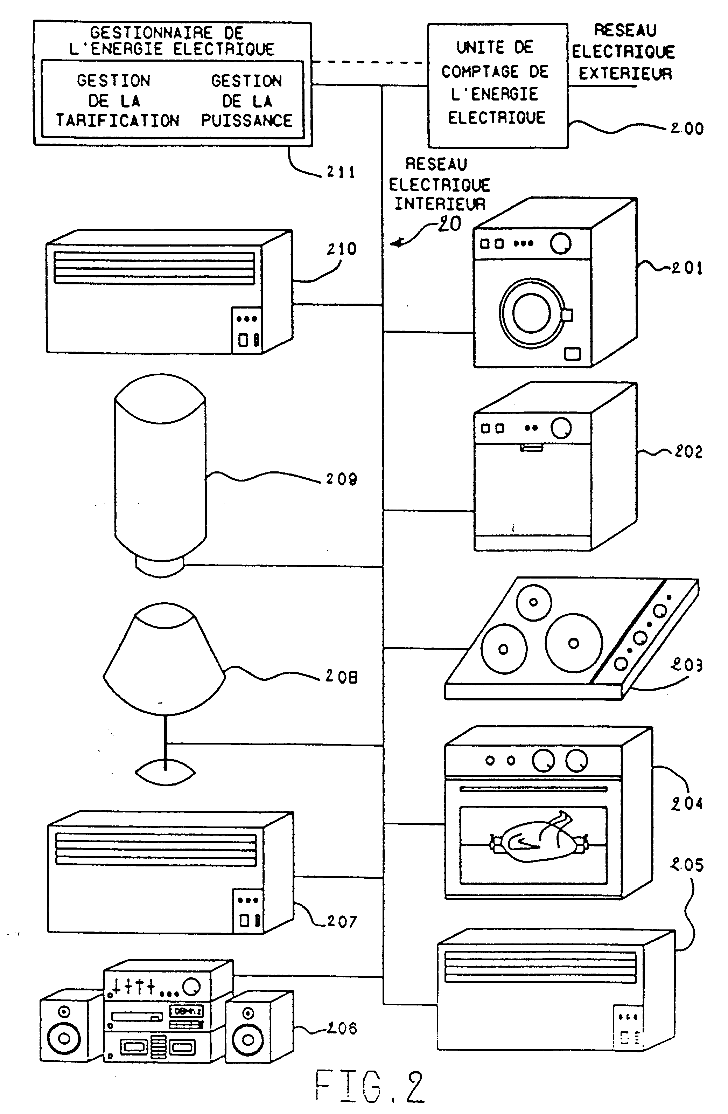

En référence à la figure 2, tous les appareils précités ont la possibilité de communiquer entre eux de manière bidirectionnelle dans un réseau domotique 20 dont le ou les supports de transmission utilisés peuvent être les courants porteurs, un câble, des moyens optiques ou radioélectriques. A titre d'exemple, à ce réseau 20 sont connectés :
- un lave-linge 201 et un lave-vaisselle 202,
- des plaques de cuisson 203 et un four 204,
- des convecteurs électriques 205, 207, 210,
- du matériel audio-vidéo 206,
- et des équipements d'éclairage 208, 209.

Le réseau 20 est également équipé d'une unité de comptage de l'énergie électrique 200 placée en interface avec un réseau électrique extérieur, et d'un appareil gestionnaire de l'énergie électrique 211 dont la structure sera décrite dans la suite. L'unité de comptage de l'énergie électrique 200 est de préférence d'un modèle électronique capable de renseigner directement le gestionnaire 211 sans intervention de l'utilisateur du réseau.

La structure de réseau la mieux adaptée pour mettre en oeuvre ce procédé est une structure multi-maître multi-esclave avec échange possible des rôles, le mode d'accès au support de transmission étant avantageusement du type à accès multiple avec écoute préalable du support et gestion des collisions.

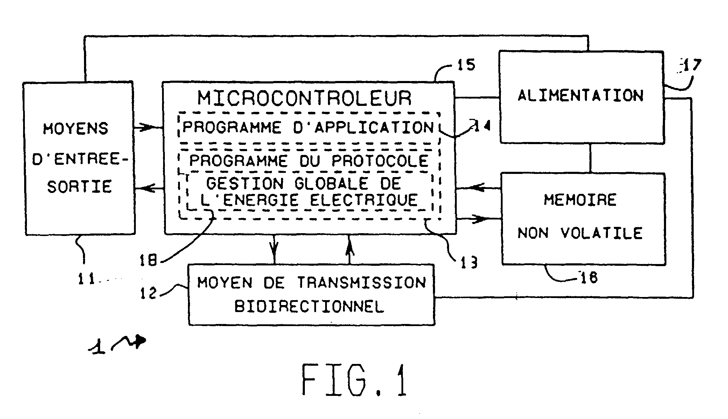

En référence à la figure 1, le procédé selon l'invention peut être mis en oeuvre dans des appareils 1 comprenant au moins :
- un micro-contrôleur 15 ;
- une mémoire non volatile et réinscriptible à volonté 16, par exemple une mémoire EEPROM, une mémoire RAM sauvegardée ou une mémoire FLASH ;
- un moyen de transmission bidirectionnel 12 adapté au média, par exemple un modem pour courants porteurs, un émetteur-récepteur haute-fréquence ou infra-rouge, ou encore une interface pour support de transmission filaire;
- des moyens d'entrée-sortie 11 et un programme d'application 14 dépendant des fonctions offertes par chaque appareil ;
- une alimentation électrique appropriée 17 ;
- un programme assurant un protocole de communication 13 et une gestion globale de l'énergie électrique 18, et plus généralement mettant en oeuvre un procédé d'ordre supérieur, le procédé selon l'invention en représentant un sous-ensemble.

Le gestionnaire 211, en référence à la figure 2, placé à proximité d'un compteur d'énergie 200, assure la traduction, puis la diffusion, au sein du réseau 20, d'informations tarifaires fournies à l'usager par le distributeur d'énergie électrique. Le gestionnaire 211 diffuse automatiquement un message à chaque changement d'état tarifaire et chaque appareil du réseau peut l'interroger à tout moment pour connaître le tarif en vigueur.

Le procédé selon l'invention repose sur la faculté qu'ont certains appareils électriques d'offrir à l'utilisateur la possibilité d'une mise en marche dite "ECO" (économique), éventuellement à plusieurs paliers pour les appareils les plus sophistiqués, qui asservit le fonctionnement de l'appareil à l'état tarifaire de l'énergie électrique. Les conditions tarifaires associées à l'état de marche "ECO" sont déterminées soit, pour tous les appareils de la maison au niveau du gestionnaire, soit, individuellement, au niveau de chaque appareil. La première solution est bien adaptée au cas des appareils électroménager simples tels que les lave-linge, lave-vaisselle, sèche-linge etc.., la deuxième solution s'appliquant aux appareils plus sophistiqués et ouvrant de nombreuses possibilités dans le cas d'une multi-tarification.

Le procédé selon l'invention permet de faire coexister au sein d'un même réseau des appareils qui fonctionnent selon les deux principes précités. En effet, le message que le gestionnaire de tarification envoie automatiquement lors d'un changement de tarif ou sur demande d'un appareil, contient à la fois un code représentatif du tarif en vigueur, ce qui permet aux appareils sophistiqués d'interpréter localement la nature de ce tarif, et un élément d'information binaire élaboré par le gestionnaire et qui indique dans l'ensemble du réseau si le tarif en vigueur est économique ou non.

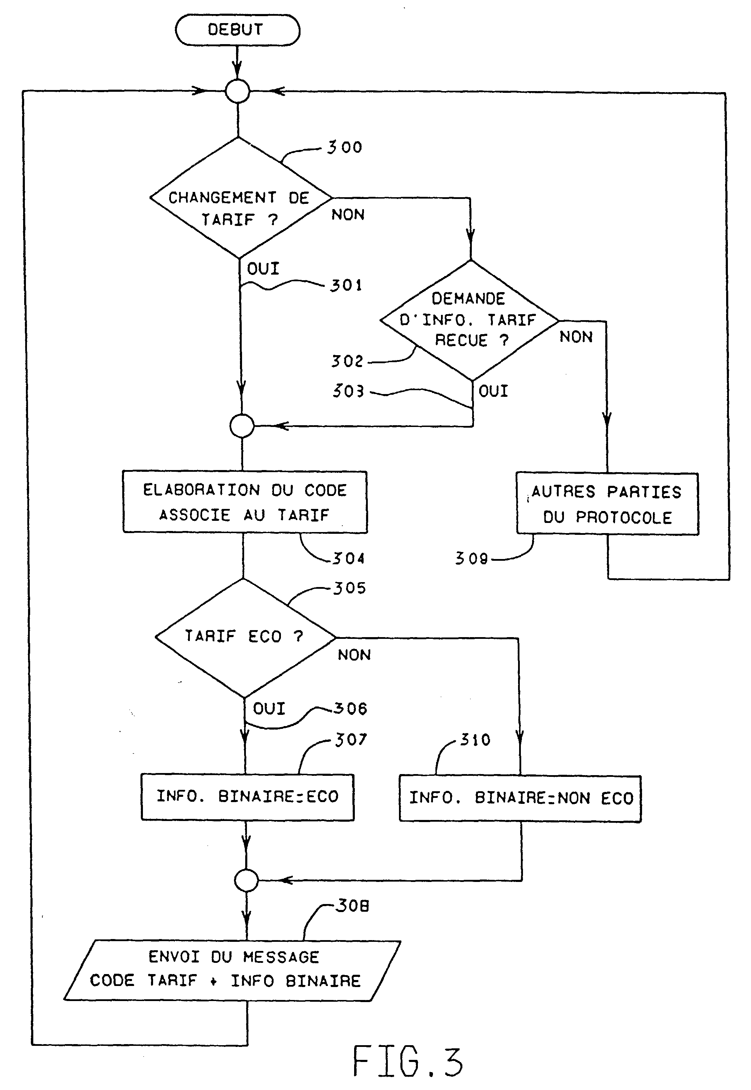

Les étapes du procédé selon l'invention, qui incombent au gestionnaire, sont les suivantes en référence à la figure 3 :
- un test de détection 300 de changement de tarif au niveau des moyens déterminant la tarification de l'énergie électrique en vigueur dans le local, par exemple, l'unité de comptage d'énergie électrique 200. S'il n'y a pas de changement, un test est effectué pour détecter une demande d'information tarifaire 302 émanant d'un appareil du réseau; si aucune demande n'est reçue, alors les autres parties du protocole sont explorées 309 avant de revenir au premier test 300 ;
- dans le cas d'une réponse positive 301, 303 aux deus tests précédents 300, 302, un code représentatif du tarif en vigueur est élaboré 304 ;
- un test 305 permettant de déterminer si le tarif en vigueur peut être considéré comme économique ou pas 305; ce test n'a d'intérêt que si la tarification possède au moins deux niveaux; si le tarif est économique 306, alors l'élément d'information binaire prend la valeur "ECO" 307, sinon il prend la valeur "NON ECO" 310 ;
- un envoi d'un message d'information tarifaire 308 avec un mode d'adressage qui limite la portée logique aux appareils du local qui correspond au gestionnaire, ce message contenant le code représentatif du tarif et l'élément d'information binaire.

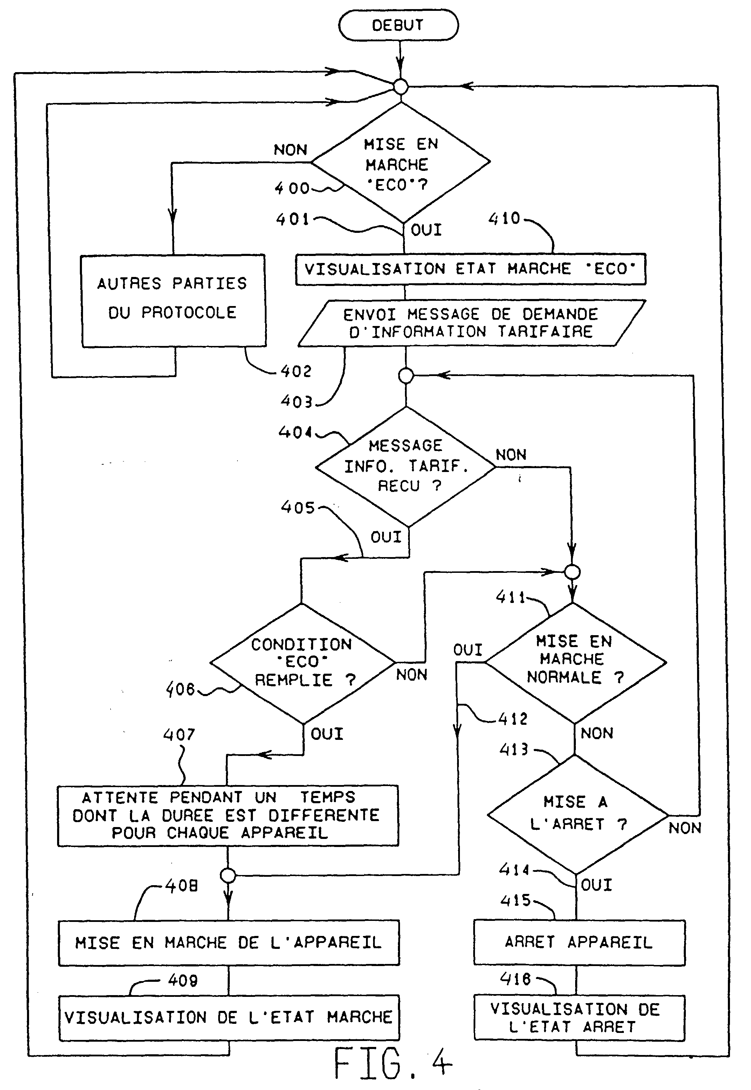

Les étapes du procédé selon l'invention, qui concernent les appareils capables d'exploiter des informations tarifaires, sont les suivantes, en référence à la figure 4 :
- un test 400 de l'état d'un bouton MARCHE "ECO" 400 ; si le résultat du test est négatif, les autres étapes du protocole de communication et/ou de gestion dont le procédé selon l'invention est un sous-ensemble , et plus généralement de tout procédé d'ordre supérieur dans lequel le procédé selon l'invention s'inscrit, sont explorées 402 ; si une mise en MARCHE "ECO" est demandée ;
- une visualisation 410 de l'état de MARCHE "ECO";
- un envoi 403 d'un message de demande d'information tarifaire en diffusion générale avec un mode d'adressage qui limite la portée logique du message aux appareils dotés de la même adresse de réseau ;
- une attente 404 de réception d'un message d'information tarifaire en provenance du gestionnaire du local ; si un tel message n'est pas reçu, le procédé teste 411 l'état du bouton de mise en marche normale ; si la mise en marche normale est demandée 412, alors l'appareil est mis en marche immédiatement 408 et cet état est visualisé 409, puis les autres étapes du protocole sont explorées 402 ; si la mise en marche normale n'est pas demandée, l'étape suivante est le test 413 d'un bouton de mise à l'arrêt ; si le résultat du test est positif 414, l'appareil est arrêté 415, cet état est visualisé 416, puis les autres étapes du protocole sont explorées 402 ; si le résultat du test 413 est négatif, le procédé revient à l'étape d'attente du message d'information tarifaire 404 ;
- si un message d'information tarifaire est reçu 405, le contenu de ce message est examiné pour savoir si les conditions autorisant la mise en marche sont remplies 406 ; si ce n'est pas le cas, le procédé revient à l'étape de test 411 du bouton de mise en marche normale, si les conditions sont remplies, une période d'attente dont la durée est différente pour chaque appareil a pour but d'étaler la pointe de courant qui, sans cette précaution, dans certains cas pourrait provoquer une disjonction du réseau électrique intérieur ;
- et un retour aux autres parties du protocole.

Il faut noter que le procédé d'ordre supérieur dans lequel s'inscrit le procédé selon l'invention peut inclure d'autres possibilités de mise en marche ou de mise à l'arrêt d'un appareil.

En outre, on peut prévoir une temporisation initiée dès l'instant où un appareil n'a pas reçu de réponse à une demande d'information tarifaire et permettant ainsi de sortir automatiquement du mode d'attente dans lequel les tests de mise en marche normale 411 et de mise à l'arrêt 413 ne sont pas satisfaits, notamment en cas de disparition du gestionnaire ou de dysfonctionnement du réseau, et d'atteindre directement l'étape 415 d'arrêt de l'appareil.

Il est à noter que certains appareils, par exemple des appareils de chauffage, de congélation ou autres, peuvent exploiter l'information de disparition des conditions tarifaires "ECO" pour arrêter leur fonctionnement.

Selon un autre mode avantageux de mise en oeuvre du procédé selon l'invention, il est proposé à l'utilisateur deux types de départ d'un cycle fonctionnel d'un appareil :
- un départ immédiat, où la préférence est donnée au temps,
- un départ "heure creuse" où la préférence est donnée aux économies d'énergie.

Ceci garantit à l'utilisateur un départ de cycle aux meilleures conditions tarifaires , ce que ne permet pas d'obtenir à coup sûr un simple départ différé.

Toute action sur un appareil dont le fonctionnement est compatible avec ce mode de réalisation de l'invention : mise en marche immédiate ou mise en marche "heure creuse" provoque une réaction instantanée de dispositifs locaux de faible puissance : par exemple, voyants, afficheurs, ventilateurs, à des fins d'ergonomie par nécessité d'une réaction immédiate de l'appareil aux sollicitations de l'utilisateur; si un départ "heure creuse" a été demandé, l'utilisateur reçoit en retour une information d'"attente heure creuse", sous la forme, par exemple, du clignotement d'un voyant "départ heure creuse" ou par tout autre moyen équivalent. Lorsque le départ devient effectif à la réception d'un message de tarif "ECO", le voyant cesse de clignoter pour rester allumé en permanence jusqu'à l'arrêt de l'appareil.

Les messages d'information tarifaire émis par le gestionnaire contiennent trois types d'informations :
- une information binaire indiquant si l'évènement tarifaire peut être classé dans la catégorie "tarif normal" ou "tarif économique "ECO" ;
- un descripteur d'évènement tarifaire principal codé sur un octet. A titre d'exemple non limitatif, le bit 7 peut indiquer s'il s'agit d'un préavis (bit 7=0) ou d'un changement de tarif effectif (bit 7=1), les bits 4 à 6 indiquent le type de tarif et les bits 0 à 2 indiquent le palier tarifaire atteint relativement à un type de tarif donné ;
- une information optionnelle à caractère prédictif, basée sur l'observation des différents changements de tarif pendant la période de 24 heures qui précède le moment d'émission de chaque message d'information tarifaire. seuls les changements d'état tarifaire effectifs sont pris en compte, à l'exclusion des préavis. Cette information optionnelle est constituée d'un ou deux blocs de 2 octets chacun, selon que le nombre de changements d'état tarifaire conservés pendant la période de 24 heures qui précède est de 1, ou 2 ou plus. Dans le cas de plus de deux changements d'état tarifaire observés, seuls les prochains probables sont indiqués. Chaque bloc d'information contient un descripteur d'évènement tarifaire et deux octets représentant la distance temporelle entre le moment de l'envoi de la trame et le moment du changement de tarif observé précédemment. Le descripteur d'évènement tarifaire est semblable au descripteur d'évènement tarifaire principal, hormis la signification du bit 7.

Les informations tarifaires peuvent être exploitées à différents niveaux :
- pour les appareils les plus simples, seule la valeur du bit 3 du descripteur d'état tarifaire principal peut être exploitée dans le cas d'un changement effectif de tarif ;
- certains appareils sophistiqués peuvent exploiter l'information précisant le type de tarif et le palier tarifaire ;
- d'autres appareils peuvent exploiter les informations relatives aux préavis ;
- les appareils les plus sophistiqués peuvent exploiter d'éventuelles informations optionnelles pour fournir à l'utilisateur une estimation du temps d'attente avant obtention du service ou, par un simple calcul, de l'heure d'obtention de ce service.

Bien entendu, l'invention n'est pas limitée aux exemples qui viennent d'être décrits et de nombreux aménagements peuvent être apportés à ces exemples sans sortir du cadre de l'invention.

Ainsi, on peut envisager pour l'acheminement des informations tarifaires au sein du réseau tout type de support, filaire ou non, avec ou sans courant porteur. De plus, l'information de changement tarifaire peut être fournie au gestionnaire par l'observation de l'état d'un dispositif de commutation commandé aussi bien à distance par courant porteur sur le réseau extérieur au local par le distributeur d'énergie électrique, ou localement par une horloge.

D'autre part, la période d'attente qui précède la mise en marche effective de l'appareil peut éventuellement être omise dans le cas où le message d'information tarifaire consécutif à la demande de marche économique "ECO" satisfait d'emblée la condition ECO.

De plus, les conditions tarifaires ECO étant le plus souvent pratiquées la nuit, la période d'attente peut avoir une durée qui tient compte de la nature du service qu'apporte l'appareil. Par exemple, on pourra préférer mettre en marche effective un lave-vaisselle peu après l'apparition des conditions tarifaires ECO pour que la vaisselle ait le temps de sécher, d'autres appareils comme les lave-linges ou les sèche-linges pourront avantageusement attendre un temps plus long avant leur mise en marche effective pour éviter le froissage du linge dû à un long séjour dans la machine après la fin du cycle.

## Revendications

1. Procédé pour gérer la tarification de l'énergie électrique dans un réseau (20) au sein d'un local, ledit réseau (20) comprenant des appareils (201-205, 207, 209) pouvant communiquer entre eux de manière bidirectionnelle, des moyens (200) pour déterminer la tarification de l'énergie électrique en vigueur dans ce local, et un appareil dit gestionnaire (211) connecté audit réseau (20), ledit procédé comprenant une étape de construction par l'appareil gestionnaire (211) d'un message d'information tarifaire contenant un code représentatif du tarif en vigueur élaboré à partir d'informations tarifaires fournies par les moyens (200) déterminant la tarification en vigueur et une diffusion de ce message d'information tarifaire sur le réseau (20) avec un mode d'adressage qui limite sa portée logique aux appareils du local, caractérisé en ce qu'il comprend en outre une étape d'élaboration par l'appareil gestionnaire (211) d'un élément d'information binaire indiquant si le tarif en vigueur doit être considéré comme économique ou pas à partir des informations tarifaires fournies par les moyens de détermination (200) et selon des conditions tarifaires associées à l'état de marche économique déterminées au niveau dudit gestionnaire (211), cet élément d'information binaire étant ensuite inclus dans le message d'information tarifaire.

2. Procédé selon la revendication 1, caractérisé en ce qu'il comprend, au niveau du gestionnaire de l'énergie électrique (211), les étapes suivantes :
- un test de détection (300) de changement de tarif au niveau des moyens pour déterminer la tarification (200), suivi, s'il n'y a pas de changement d'un test effectué pour détecter une demande d'information tarifaire (302) émanant d'un appareil du réseau; si aucune demande n'est reçue, alors les autres parties du protocole sont explorées (309) avant de revenir au premier test (300);
- dans le cas d'une réponse positive (301, 303) à l'un ou l'autre des deux tests précédents (300, 302), un code représentatif du tarif en vigueur est élaboré (304);
- un test (305) permettant de déterminer si le tarif en vigueur peut être considéré comme économique ou pas (305); si le tarif est économique (306), alors l'élément d'information binaire prend la valeur "ECO" (307), sinon il prend la valeur "NON ECO" (310);
- un envoi d'un message d'information tarifaire (308) avec un mode d'adressage qui limite la portée logique aux appareils du local qui correspond au gestionnaire (200), ce message contenant le code représentatif du tarif et l'élément d'information binaire.

3. Procédé selon l'une des revendications 1 à 2, caractérisé en ce qu'il comprend, au niveau de chaque appareil du réseau pouvant exploiter des informations tarifaires, les étapes suivantes :
- un test (400) de l'état d'un bouton MARCHE "ECO" associé audit appareil, suivi, si le résultat du test est négatif, de l'exécution (402) d'étapes d'un procédé d'ordre supérieur dont le procédé selon l'invention est un sous-ensemble, notamment d'un protocole de communication et/ou de gestion, et si une mise en MARCHE "ECO" est demandée;
- une visualisation (410) dudit état de MARCHE "ECO";
- un envoi (403) d'un message de demande d'information tarifaire en diffusion générale avec mode d'adressage qui limite la portée logique du message aux appareils dotés de la même adresse de réseau;
- une attente (404) de réception d'un message d'information tarifaire en provenance du gestionnaire (211) du local, suivie, si un tel message n'est pas reçu, d'un test (411) de l'état du bouton de mise en marche normale et d'un bouton de mise à l'arrêt (414).

4. Procédé selon la revendication 3, caractérisé en ce que, à l'issue dudit test d'état (411), si la mise en marche normale est demandée (412), alors l'appareil est mis en marche immédiatement (408) et cet état est visualisé (409), puis les autres étapes du procédé d'ordre supérieur sont explorées (402); si la mise en marche normale n'est pas demandée, un test (413) d'un bouton de mise à l'arrêt est effectué.

5. Procédé selon la revendication 4, caractérisé en ce que, si le résultat du test (413) du bouton de mise à l'arrêt est positif (414), l'appareil est arrêté (415), cet état est visualisé (416), puis les autres étapes du procédé d'ordre supérieur sont explorées (402); si le résultat du test (413) est négatif, le procédé revient à l'étape d'attente du message d'information tarifaire (404).

6. Procédé selon la revendication 5, caractérisé en ce que, si un message d'information tarifaire est reçu (405), le contenu de ce message est examiné pour savoir si les conditions autorisant la mise en marche sont remplies (406), et dans le cas contraire, une étape de test (411) du bouton de mise en marche normale et une étape de test (413) du bouton de mise à l'arrêt sont de nouveau effectuées.

7. Procédé selon la revendication 6, caractérisé en ce que, si le test (406) déterminant si le message d'information tarifaire reçu contient une information de "tarif économique", une période d'attente (407), dont la durée est différente pour chaque appareil, est effectuée avant la mise en marche effective dudit appareil.

8. Procédé selon l'une quelconque des revendications précédentes, caractérisé en ce qu'il peut être combiné à un procédé de gestion de puissance pour permettre une gestion globale de l'énergie électrique sur un réseau au sein d'un local.

9. Procédé selon l'une des revendications précédentes, caractérisé en ce que le message d'information tarifaire comprend en outre une information optionnelle à caractère prédictif, basée sur l'observation des différents changements de tarifs pendant une période prédéterminée qui précède le moment d'émission de chaque message d'information tarifaire.

## Patentansprüche

1. Verfahren zur Verwaltung der Tarifauswahl für elektrische Energie in einem lokalen Netz (20), das Geräte (201-205, 207, 209), die in bidirektionaler Weise miteinander kommunizieren können, eine Einrichtung (200) zur Bestimmung der lokal geltenden Tarifauswahl für elektrische Energie und ein mit dem Netz verbundenes Verwaltungsgerät (211) aufweist, mit einem Verfahrensschritt zur Erstellung einer Tarifinformationsnachricht mit dem Verwaltungsgerät (211), die einen den geltenden Tarif wiedergebenden Code enthält, der aus von der Einrichtung (200) zur Bestimmung der geltenden Tarifauswahl gelieferten Tarifinformationen gebildet ist, und mit einer Aussendung der Tarifinformationsnachricht im Netz (20) mit einer Adressierungsart, die die logische Reichweite auf lokale Geräte begrenzt, dadurch gekennzeichnet, daß es einen weiteren Verfahrensschritt zur Bildung eines binären Informationselements durch das Verwaltungsgerät (211) umfaßt, in dem das binäre Informationselement aus von der Bestimmungseinrichtung (200) gelieferten Informationen und gemäß den Tarifbedingungen, die zu einem als ökonomisch markierten Zustand gehören, der von neuem von dem Verwaltungsgerät (211) bestimmt worden ist, anzeigt, ob der geltende Tarif als ökonomisch oder nicht anzusehen ist, wobei das binäre Informationselement anschließend in die Tarifinformationsnachricht eingeschlossen wird.

2. Verfahren nach Patentanspruch 1, dadurch gekennzeichnet, daß es auf der Stufe der Verwaltung (211) der elektrischen Energie die folgenden Verfahrensschritte aufweist:
- ein Test (300) zur Bestimmung einer Tarifänderung auf der Stufe der Einrichtung (200) zur Bestimmung der Tarifauswahl gefolgt, wenn keine Veränderung stattgefunden hat, von einem Test (302), zur Bestimmung, ob eine Tarifinformation (302) von einem Gerät im Netz angefordert worden ist; wenn keine Anforderung erhalten worden ist, werden zunächst die anderen Teile des Protokolls überprüft (309) bevor zum ersten Test (300) zurückgekehrt wird;
- im Falle einer positiven Antwort (301, 303) auf den einen oder den anderen der vorhergehenden Tests (300, 302) wird ein den geltenden Tarif wiedergebender Code erzeugt (304);
- ein Test (305) zur Bestimmung, ob der geltende Tarif als ökonomisch oder nicht angesehen werden kann (305); wenn der Tarif ökonomisch ist (306) erhält das binäre Informationselement den Wert "ECO" (307) wenn nicht, erhält es den Wert "NON ECO" (310);
- eine Aussendung einer Tarifinformationsnachricht (308) mit einer Adressierungsart, die die logische Reichweite auf lokale Geräte beschränkt, die zu der Verwaltung (200) gehören, wobei die Nachricht den den Tarif charakterisierenden Code und das binäre Informationselement enthält.

3. Verfahren nach Anspruch 1 oder 2 dadurch gekennzeichnet, daß es auf der Stufe jedes Gerätes im Netz, das die Tarifinformationen auswerten kann, die folgenden Verfahrensschritte aufweist:
- ein Test (400) des Zustands eines dem Gerät zugeordneten Knopfes BETRIEB "ECO" gefolgt, wenn das Ergebnis des Tests negativ ist, von der Ausführung (402) von Verfahrensschritten eines übergeordneten Verfahrens, in dem das erfindungsgemäße Verfahren eine Untermenge ist, insbesondere eines Kommunikations- und/oder Verwaltungsprotokolls, und, falls der Einsatz eines BETRIEB "ECO" angefordert wird,
- eine Anzeige (410) des BETRIEB "ECO",
- eine Übermittlung (403) einer Tarifinformationsnachricht in einem Rundruf mit einer Adressierungsart, die die logische Reichweite der Nachricht auf Geräte beschränkt, die mit derselben Netzadresse versehen sind,
- eine Empfangsbereitschaft (404) für eine von der lokalen Verwaltung (211) ausgesandten Tarifinformationsnachricht, gefolgt von einem Zustandstest (411) für einen Knopf zur Einschaltung eines normalen Betriebszustandes und eines Knopfs zum Abschalten (414), wenn eine solche Nachricht nicht empfangen worden ist.

4. Verfahren nach Anspruch 3, dadurch gekennzeichnet, daß nach Abschluß des Zustandstests (411) für den Fall, daß die Einschaltung des normalen Betriebszustands angefordert worden ist (412) das Gerät sofort in Betrieb genommen wird (408) und dieser Zustand angezeigt (409) wird und dann die anderen Verfahrensschritte des übergeordneten Verfahrens (402) ausgeführt werden; wenn die Einschaltung des normalen Betriebszustandes nicht angefordert worden ist, wird ein Test (413) für den Abschaltknopf ausgeführt.

5. Verfahren nach Anspruch 4, dadurch gekennzeichnet, daß für den Fall, daß das Ergebnis des Tests (413) für den Abschaltknopf positiv ist (414) das Gerät abgeschaltet wird (415) und dieser Zustand angezeigt wird (416), wonach die anderen Verfahrensschritte des übergeordneten Verfahrens ausgeführt werden (402); wenn das Ergebnis des Tests (413) negativ ist, kehrt das Verfahren zum Wartezustand auf eine Tarifinformationsnachricht (404) zurück.

6. Verfahren nach Anspruch 5, dadurch gekennzeichnet, daß im Falle des Empfangs einer Tarifinformationsnachricht (405) der Inhalt dieser Nachricht daraufhin überprüft wird, ob die Bedingungen für das Anschalten erfüllt sind (406) und daß im gegenteiligen Fall ein Testschritt (411) für den Knopf zur Einschaltung des normalen Betriebszustandes und ein Testschritt (413) für den Abschaltknopf von neuem ausgeführt werden.

7. Verfahren nach Anspruch 6, dadurch gekennzeichnet, daß für den Fall, daß der Test (406) ergibt, daß die Tarifinformationsnachricht eine Information über "ökonomischer Tarif" enthält, eine Bereitschaftszeit (407) eingerichtet wird, deren Dauer für jedes Gerät verschieden ist, bevor das entsprechende Gerät tatsächlich eingeschaltet wird.

8. Verfahren nach einem der vorhergehenden Patentansprüche, dadurch gekennzeichnet, daß es mit einem Verfahren zur Leistungssteuerung kombiniert werden kann, um eine umfassende Verwaltung der elektrischen Energie in einem lokalen Netz zu erlauben.

9. Verfahren nach einem der vorhergehenden Patentansprüche, dadurch gekennzeichnet, daß die Tarifinformationsnachricht unter anderem eine optionale Information mit einem Vorhersagecharakter aufweist, die auf der Beobachtung der verschiedenen Änderungen des Tarifs während einer vorbestimmten Zeit basiert, die dem Aussendungszeitpunkt jeder Tarifinformationsnachricht vorangeht.

## Claims

1. Method for managing the tariff of electric power in a network (20) within a dwelling, said dwelling (20) containing appliances (201-205, 207, 209) capable of 2-way communication with each other, means (200) for determining the tariff of electric power in force in that dwelling, and a so-called manager apparatus (211) connected to said network (20), said method comprising a step for building by said manager apparatus (211) a tariff information message containing a code which represents the tariff in force elaborated from tariff informations provided by said means (200) determining the tariff in force, and a step for broadcasting said tariff information message on the network (20) with an addressing mode which limits its logical range to the appliances in the dwelling, characterised in that it further comprises a step for elaborating by said manager apparatus (211) a binary information element indicating whether or not the tariff has to be regarded as economic from tariff informations provided by said determination means (200) and according to tariff conditions which are associated with the economic operating status and determined at the level of said manager apparatus (211), said binary information element being further included into the tariff information message.

2. Method according to claim 1, characterised in that it comprises, at the level of the electric power manager (211), the following steps:
- A detection test (300) for a tariff change in the tariff determination means (200), followed, it there is no change, by a test performed to detect a tariff information request (302) from an appliance in the network; if no request is received, the other parts of the protocol are executed (309) before returning to the initial test (300);
- If there is a positive response (301, 303) to the two previous tests (300, 302), a code representing the tariff in force is generated (304);
- A test (305) used to determine whether or not the tariff in force can be regarded as economic (305); if the tariff is economic (306), the binary information element assumes the value "ECO" (307), otherwise it assumes the value "NOT ECO" (310);
- Sending a tariff information message (308) with a method of addressing that limits its logical range to those appliances in the dwelling handled by the manager (200), this message containing the code which represents the tariff and the binary information element.

3. Method according to one of claims 1 or 2, characterised in that it comprises, in each appliance in the network capable of analyzing tariff information, the following steps:
- A test (400) on the status of a "ECO" SWITCH-ON button associated with said appliance, followed, if the result of the test is negative, by executing (402) the steps in a higher-ranking method of which the method according to the invention is a subset, particularly a communication and/or management protocol and if "ECO" SWITCH-ON is requested;
- Display (410) of the said "ECO" SWITCH-ON status;
- Sending (403) of a general broadcast tariff information request message with a method of addressing that limits the logical range of the message to those appliances that have the same network address;
- Waiting (404) to receive a tariff information message from the manager (211) in the dwelling, followed, if such a message is not received, by a test (411) on the status of the normal switch-on button and a switch-off button (414).

4. Method according to claim 3, characterised in that, on completion of the said status test (411), if normal switch-on is requested (412), the appliance is switched on immediately (408) and this status is displayed (409), then the other steps in the higher-ranking method are executed (402); if normal switch-on was not requested, a test (413) on a switch-off button is performed.

5. Method according to claim 4, characterised in that if the result of test (413) on the switch-off button is positive (414), the appliance is switched off (415), this status is displayed (416), then the other steps in the higher-ranking method are executed (402); if the result of test (413) is negative, the method returns to the step involving waiting for a tariff information message (404).

6. Method according to claim 5, characterised in that, if a tariff information message is received (405), the content of this message is examined to ascertain whether or not conditions authorising switch-on are satisfied (406) and, if this is not the case , a test step (411) on the normal switch-on button and a test step (413) on the switch-off button are performed again.

7. Method according to claim 6, characterised in that if the test (406) determining whether or not the tariff information message received contains an "economic tariff" signal, a waiting period (407), of which the duration varies for each appliance, is initiated before the said appliance is actually switched on.

8. Method according to any of the preceding claims, characterised in that it can be combined with a method of managing electric power to allow global management of electric power in a network within a dwelling.

9. Method according to any of the preceding claims, characterised in that the tariff information message also includes a predictive optional information, based on the observations of the tariff changes during a predetermined period preceding the sending instant of each tariff information message.
